# EUROPEAN PATENT APPLICATION

(11) **EP 4 749 788 A1**
(43) Date of publication of application: **27.05.2026**
(21) Application number: 25207111.3
(22) Date of filing: 07.10.2025
(51) Int. Cl.: H01M 50/209, H01M 50/224, H01M 50/282, H01M 50/293, H01M 50/375, H01M 50/593

(54) **BATTERY DEVICE**

(30) Priority: 21.11.2024 JP 2024203333
(71) Applicant: TOYOTA JIDOSHA KABUSHIKI KAISHA, Toyota-shi, Aichi-ken 471-8571 (JP)
(72) Inventor: MATSUO, Kensuke, Toyota-shi, 471-8571 (JP); GOTO, Yuuki, Toyota-shi, 471-8571 (JP)
(74) Representative: TBK

(57) **Abstract**

A battery device includes: a plurality of battery cells, each including a cell case provided with a relief valve that opens when internal pressure reaches a predetermined threshold; a case that houses the plurality of battery cells; a non-combustible paper that is provided at at least a part of an inner surface of the case; an intermediate material that is provided at a surface of the non-combustible paper opposite from the inner surface and that has a higher mechanical strength than the non-combustible paper; and an insulating plate that is provided at a surface of the intermediate material opposite from the non-combustible paper, that opposes the relief valves, and that has electrical insulation properties and a higher mechanical strength than the non-combustible paper, wherein thermal insulation properties of the non-combustible paper and the intermediate material are higher than those of the insulating plate.

## Description

### BACKGROUND

### Technical Field

The present disclosure relates to a battery device.

### Related Art

Japanese Patent No. 7,087,648 discloses a battery device where a plurality of battery cells are provided inside a case. The case includes a lower case made of metal and an upper case made of resin. An iron plate opposing relief valves provided in upper portions of each of the battery cells is secured to a top portion of an inner surface of the upper case.

When the internal pressure of any of the battery cells rises, the relief valve opens and hot gas is discharged forcefully from the relief valve to the outside of the battery cell and collides with the iron plate. For that reason, the iron plate inhibits the upper case from becoming hot due to the hot gas discharged from the battery cell.

In Japanese Patent No. 7,087,648, there is the risk that the upper case will become hot when the iron plate drops from the upper case due to the effects of the gas. In this way, Japanese Patent No. 7,087,648 has room for improvement in relation to inhibiting the case from becoming hot due to the effects of hot substances discharged from battery cells.

### SUMMARY

In consideration of the above circumstances, it is an object of the present disclosure to obtain a battery device that can inhibit a case from becoming hot due to the effects of substances discharged from battery cells.

A battery device of a first aspect includes: a plurality of battery cells, each including a cell case provided with a relief valve that opens when internal pressure reaches a predetermined threshold; a case that houses the plurality of battery cells; a non-combustible paper that is provided at at least a part of an inner surface of the case; an intermediate material that is provided at a surface of the non-combustible paper opposite from the inner surface and that has a higher mechanical strength than the non-combustible paper; and an insulating plate that is provided at a surface of the intermediate material opposite from the non-combustible paper, that opposes the relief valves, and that has electrical insulation properties and a higher mechanical strength than the non-combustible paper, wherein thermal insulation properties of the non-combustible paper and the intermediate material are higher than the thermal insulation properties of the insulating plate.

In the battery device of the first aspect, when the internal pressure of any of the battery cells reaches a predetermined threshold, the relief valve opens and substances inside the battery cell are discharged via the relief valve to the outside of the cell case. For that reason, hot substances may collide forcefully with the insulating plate opposing the relief valve. However, the mechanical strengths of the insulating plate and the intermediate material positioned between the insulating plate and the non-combustible paper are higher than that of the non-combustible paper. For that reason, even if the substances collide forcefully with the insulating plate, the risk is small that the non-combustible paper will come off from the inner surface of the case. For that reason, the non-combustible paper can inhibit the heat of the substances from being transmitted to the case.

Moreover, if the insulating plate of the battery device of the first aspect falls off from the case, the insulating plate may simultaneously come into contact with terminals of two adjacent battery cells. However, since the insulating plate has electrical insulation properties, a short circuit via the insulating plate does not occur between the two adjacent battery cells. For that reason, the risk is small that the battery cells will become hot due to a short circuit.

In this way, when the substances are discharged from the battery cell, the heat of the substances is unlikely to be transmitted to the case, and a short circuit via the insulating plate does not occur between the two adjacent battery cells. For that reason, the battery device of the first aspect can inhibit the case from becoming hot due to the effects of the substances discharged from the battery cell.

A battery device of a second aspect is the battery device of the first aspect, wherein the case is configured by a material containing iron, and the inner surface of the case is coated with a cationic coating.

The case of the battery device of the second aspect is configured by a material containing iron, but since the surface of the case is coated with the cationic coating, the case is unlikely to rust. Moreover, the part with the cationic coating easily self-ignites when it becomes hot. However, since the case is unlikely to become hot, the risk is small that the part with the cationic coating will self-ignite when the hot substances are discharged from the battery cell.

A battery device of a third aspect is the battery device of the first aspect or the second aspect, wherein an area of the non-combustible paper and the intermediate material when viewed in a thickness direction of the non-combustible paper is greater than an area of the insulating plate.

In the battery device of the third aspect, the discharge range of gas from the battery cell tends to become wider than the discharge range from the battery cell of the substances that collide forcefully with the insulating plate. However, since the area of the non-combustible paper and the intermediate material when viewed in the thickness direction of the non-combustible paper is greater than the area of the insulating plate, the non-combustible paper and the intermediate material can inhibit the case from becoming hot due to the hot gas discharged across a wider range than the substances that have collided forcefully with the insulating plate.

A battery device of a fourth aspect is the battery device of any of the first aspect to the third aspect, wherein the intermediate material is glass cloth.

In the battery device of the fourth aspect, the intermediate material is glass cloth. For that reason, it is easy to manufacture at a low cost the intermediate material that has a higher mechanical strength than the non-combustible paper and higher thermal insulation properties than the insulating plate.

A battery device of a fifth aspect is the battery device of any of the first aspect to the fourth aspect, wherein the insulating plate is a mica plate.

In the battery device of the fifth aspect, the insulating plate is a mica plate. For that reason, the insulating plate of the fifth aspect has high electrical insulation properties and mechanical strength.

A battery device of a sixth aspect is the battery device of any of the first aspect to the fifth aspect, wherein the case includes a lower case and an upper case that is integrated with the lower case to configure, with the lower case, the case, the relief valves are provided at upper surfaces of the cell cases, and the non-combustible paper is provided at a top portion of an inner surface of the upper case.

In the battery device of the sixth aspect, the substances inside the battery cell may be discharged upward of the battery cell via the relief valve provided in the upper surface of the cell case, and the substances may collide forcefully with the insulating place provided on the top portion of the inner surface of the upper case. In this case, there is the risk that the insulating plate will fall off from the upper case and simultaneously come into contact with terminals of two adjacent battery cells. However, since the insulating plate has electrical insulation properties, a short circuit via the insulating plate does not occur between the two adjacent battery cells.

A battery device of a seventh aspect is the battery device of any of the first aspect to the sixth aspect, wherein a battery stack having the plurality of battery cells arranged in a predetermined linear direction as seen in a plan view is provided inside the case, the insulating plate is a plate material extending along the linear direction, and the insulating plate is a single insulating plate that opposes the relief valves of the plurality of battery cells.

In the battery device of the seventh aspect, the single insulating plate opposes the relief valves of the plurality of battery cells. For that reason, the number of parts of the battery device of the seventh aspect can be reduced.

A battery device of an eighth aspect is the battery device of the seventh aspect, wherein a plurality of battery stacks are arranged while forming a gap in a direction orthogonal to the linear direction as seen in a plan view, two insulating plates oppose each plurality of battery cells arranged in the linear direction, and the two insulating plates are provided at the intermediate material, which is a single intermediate material that overlies the gap when viewed in a thickness direction of the non-combustible paper.

In the battery device of the eighth aspect, the number of parts can be reduced compared with a case where two intermediate materials are provided in the case so as to not overlie the gap formed between the two adjacent battery stacks.

A battery device of a ninth aspect is the battery device of the eighth aspect, wherein the intermediate material is a single intermediate material, the non-combustible paper is a single non-combustible paper, and the single intermediate material is provided at the single non-combustible paper, and when a direction orthogonal to the linear direction when viewed in the thickness direction of the non-combustible paper is defined as an orthogonal direction, end portions of the non-combustible paper and the intermediate material on one side in the orthogonal direction are positioned more toward the one side than are the two insulating plates, and end portions of the non-combustible paper and the intermediate material on another side in the orthogonal direction are positioned more toward the other side than are the two insulating plates.

In the battery device of the ninth aspect, the single non-combustible paper and the single intermediate material can inhibit a wide region of the case from becoming hot due to hot gas discharged from the battery cells.

A battery device of a tenth aspect is the battery device of any of the first aspect to the ninth aspect, wherein the battery device is installed at an electric vehicle.

The battery device of the tenth aspect can inhibit the case of the battery device installed at the electric vehicle from becoming hot due to the effects of substances discharged from the battery cells.

As described above, the battery device pertaining to the disclosure has the superior effect that it can inhibit a case from becoming hot due to the effects of substances discharged from battery cells.

### BRIEF DESCRIPTION OF THE DRAWINGS

An exemplary embodiment of the present disclosure will be described in detail based on the following figures, wherein:
FIG. 1 is a schematic plan view showing a battery device pertaining to the embodiment and a portion of vehicle body frame members of an electric vehicle that includes the battery device;
FIG. 2 is a schematic sectional view taken along arrowed line 2-2 of FIG. 1;
FIG. 3 is a schematic exploded perspective view of the battery device;
FIG. 4 is a schematic perspective view of an upper case and cover units that are separated from each other;
FIG. 5 is a schematic exploded perspective view of one of the cover units;
FIG. 6 is a schematic bottom view of the upper case and the cover units;
FIG. 7 is a schematic sectional view of a top plate portion of the upper case, a cover unit, and a battery stack;
FIG. 8 is a schematic perspective view of a battery cell;
FIG. 9 is a schematic plan view of a lower case and battery stacks; and
FIG. 10 is the same sectional view as FIG. 7 when a mica plate has fallen off from the top plate portion of the upper case.

### DETAILED DESCRIPTION

A battery device pertaining to an embodiment will be described below with reference to the attached drawings. It will be noted that arrow UP, arrow FR, and arrow LH in the drawings indicate an upward direction in a vehicle up and down direction, a forward direction in a vehicle front and rear direction (an orthogonal direction), and a leftward direction in a vehicle left and right direction (a linear direction), respectively.

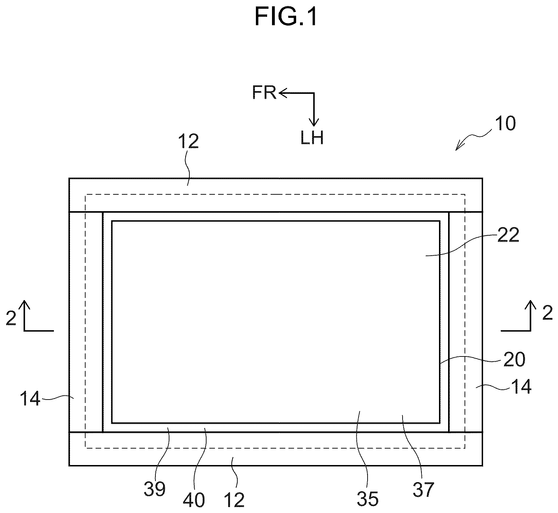

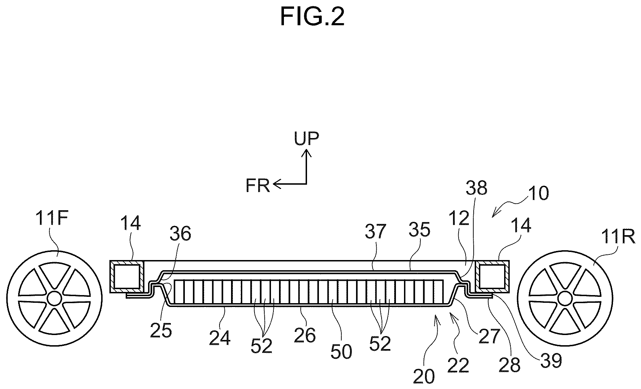

As shown in FIG. 1 and FIG. 2, a battery device 20 of this embodiment is installed in a vehicle (an electric vehicle) 10. The vehicle 10 of this embodiment is a battery electric vehicle (BEV).

The vehicle 10 includes a left and right pair of front wheels 11F, a left and right pair of rear wheels 11R, a left and right pair of rockers 12 that are portions of vehicle body frame members and extend in the vehicle front and rear direction, and a front and rear pair of crossmembers 14 that are portions of vehicle body frame members that extend in the vehicle width direction (left and right direction) and both end portions of which are secured to the left and right rockers 12.

The battery device 20 of this embodiment includes a battery case 22 and battery stacks 50. Electrical power from the battery device 20 (battery cells 52) is supplied to an electric motor (not shown in the drawings) that applies driving force to the front wheels 11F and the rear wheels 11R.

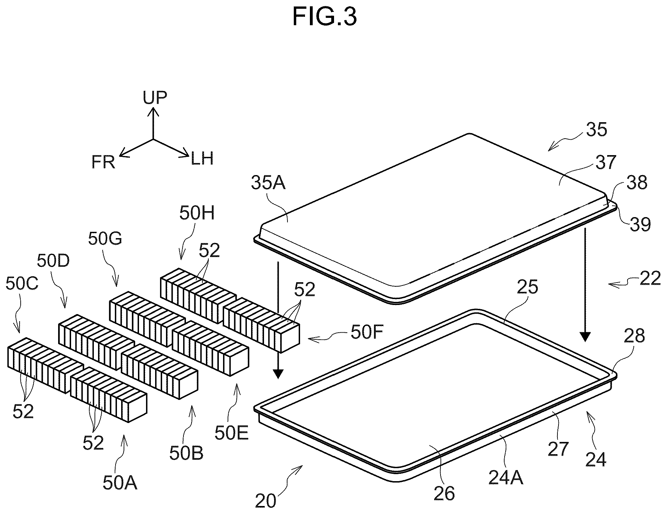

As shown in FIG. 2 and FIG. 3, the battery case 22 has a lower case 24 and an upper case 35. The lower case 24 and the upper case 35 are integrally molded parts made of a metal containing iron. Moreover, the entire surface of the lower case 24 is coated with a cationic coating 24A, and the entire surface of the upper case 35 is coated with a cationic coating 35A.

The lower case 24 is a hollow body having an open portion 25 formed in its upper surface. The lower case 24 includes a bottom plate portion 26, a peripheral wall portion 27, and an outer peripheral flange 28. The planar shape of the peripheral wall portion 27 is a loop shape, and the lower end portion of the peripheral wall portion 27 is connected to the outer peripheral edge portion of the bottom plate portion 26. The planar shape of the outer peripheral flange 28 is a loop shape, and the inner peripheral edge portion of the outer peripheral flange 28 is connected to the upper end portion of the peripheral wall portion 27.

The upper case 35 is a hollow body having open portion 36 formed in its lower surface. The upper case 35 includes a top plate portion 37, a peripheral wall portion 38, and an outer peripheral flange 39. The planar shape of the peripheral wall portion 38 is a loop shape, and the upper end portion of the peripheral wall portion 38 is connected to the outer peripheral edge portion of the top plate portion 37. The planar shape of the outer peripheral flange 39 is a loop shape, and the inner peripheral edge portion of the outer peripheral flange 39 is connected to the lower end portion of the peripheral wall portion 38.

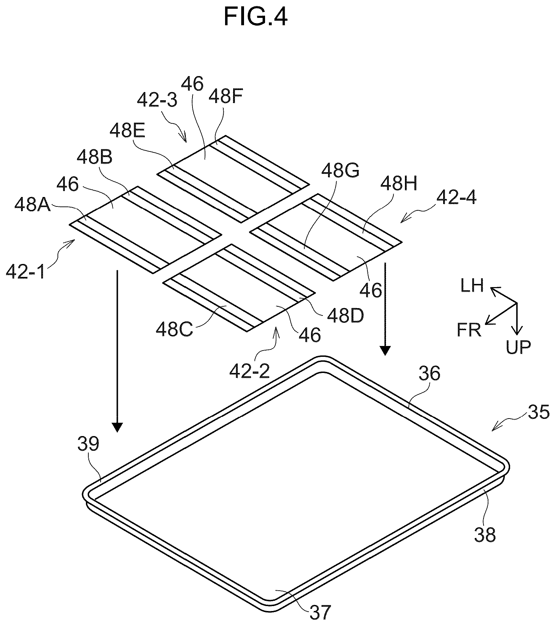

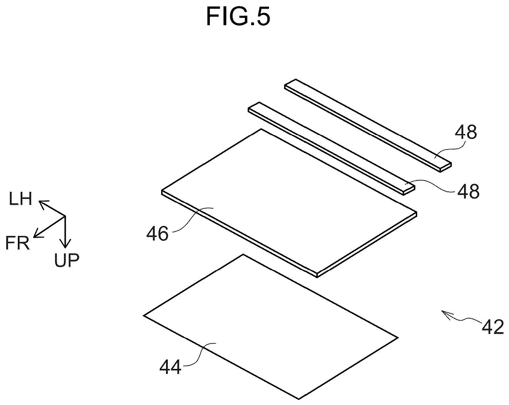

As shown in FIG. 4, four cover units 42-1, 42-2, 42-3, 42-4 are secured to the inner surface (lower surface) of the top plate portion 37 of the upper case 35. It will be noted that when it is not necessary to distinguish between each of the cover units, the cover units 42-1, 42-2, 42-3, 42-4 will be collectively called the cover units 42. As shown in FIG. 5, the cover units 42 each include a non-combustible paper 44, a glass cloth (intermediate material) 46 whose planar shape is substantially identical to that of the non-combustible paper 44, and two mica plates (insulating plates) 48. The planar shape of the non-combustible paper 44 is a rectangle whose left and right dimension is longer than its front and rear dimension. The planar shape of the glass cloth 46 is substantially identical to that of the non-combustible paper 44. The planar shape of each of the mica plates 48 is a rectangle whose left and right dimension is substantially identical to that of the non-combustible paper 44 and whose front and rear dimension is shorter than that of the non-combustible paper 44. That is, the mica plates 48 are plate materials extending along the left and right direction. As shown in FIG. 4, the left and right dimensions of the non-combustible paper 44, the glass cloth 46, and the mica plates 48 are shorter than ½ of the left and right dimension of the top plate portion 37. The front and rear dimensions of the non-combustible paper 44 and the glass cloth 46 are shorter than ½ of the front and rear dimension of the top plate portion 37.

The non-combustible paper 44 is, for example, an inorganic paper whose main component is magnesium silicate, which is a non-asbestos natural mineral. The non-combustible paper 44 has excellent thermal insulation properties. In other words, the thermal insulation properties of the non-combustible paper 44 are higher than those of the upper case 35, the glass cloth 46, and the mica plates 48. Moreover, the non-combustible paper 44 has electrical insulation properties. As the non-combustible paper 44, for example, M-thermo thermal insulation material (I-30F) from Awa Paper & Technological Company, Inc. can be used. The M-thermo thermal insulation material (I-30F) has high thermal resistance (600 °C).

The glass cloth 46 is a woven fabric made using glass yarn. The glass cloth 46 has excellent mechanical strength. In other words, the mechanical strength of the glass cloth 46 is higher than that of the non-combustible paper 44. Moreover, the thermal insulation properties of the glass cloth 46 are higher than those of the mica plates 48.

The mica plates 48 are plate materials made of mica. As is known, mica has excellent electrical insulation properties and thermal resistance properties. The electrical insulation properties of the mica plates 48 are higher than those of the non-combustible paper 44 and the glass cloth 46. Moreover, the mica plates 48 have excellent mechanical strength. In other words, the mechanical strength of the mica plates 48 is higher than those of the non-combustible paper 44 and the glass cloth 46.

As shown in FIG. 4, FIG. 6, and FIG. 7, the upper surface of the glass cloth 46 is secured to the lower surface of the non-combustible paper 44 using a heat-resistant double-sided tape (not shown in the drawings). As seen in a plan view, the outer peripheral edge portion of the non-combustible paper 44 and the outer peripheral edge portion of the glass cloth 46 coincide with each other in the up and down direction. Moreover, the upper surfaces of the two mica plates 48 are secured to the lower surface of the glass cloth 46 using multiple pieces of heat-resistant double-sided tape (not shown in the drawings). As seen in a plan view, the left-side edge portion of the glass cloth 46 and the left-side edge portions of the two mica plates 48 coincide in the up and down direction, and the right-side edge portion of the glass cloth 46 and the right-side edge portions of the two mica plates 48 coincide in the up and down direction.

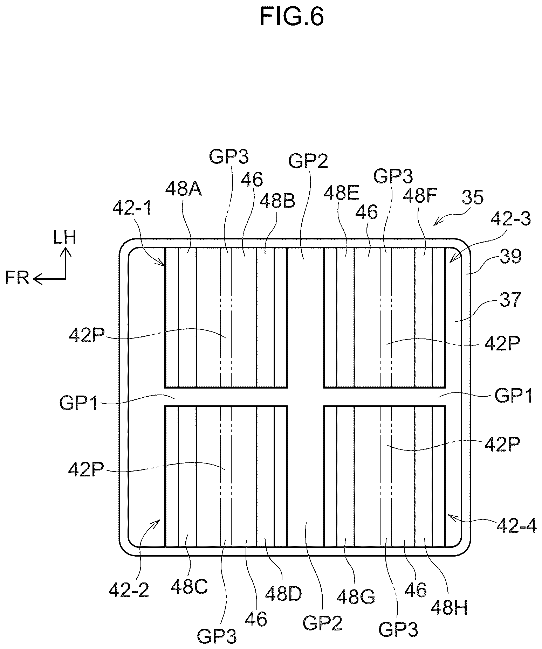

As shown in FIG. 4 and FIG. 6, in the following description, sometimes the two mica plates 48 provided on the glass cloth 46 of the cover unit 42-1 will be called the mica plates 48A, 48B. The mica plate 48B is positioned rearward of the mica plate 48A. The front edge portions of the non-combustible paper 44 and the glass cloth 46 of the cover unit 42-1 are positioned more forwardly than the front edge portion of the mica plate 48A, and the rear edge portions of the non-combustible paper 44 and the glass cloth 46 of the cover unit 42-1 are positioned more rearwardly than the rear edge portion of the mica plate 48B. Furthermore, sometimes the two mica plates 48 provided on the glass cloth 46 of the cover unit 42-2 will be called the mica plates 48C, 48D. The mica plate 48D is positioned rearward of the mica plate 48C. The front edge portions of the non-combustible paper 44 and the glass cloth 46 of the cover unit 42-2 are positioned more forwardly than the front edge portion of the mica plate 48C, and the rear edge portions of the non-combustible paper 44 and the glass cloth 46 of the cover unit 42-2 are positioned more rearwardly than the rear edge portion of the mica plate 48D. Furthermore, the two mica plates 48 provided on the glass cloth 46 of the cover unit 42-3 will sometimes be called the mica plates 48E, 48F. The mica plate 48F is positioned rearward of the mica plate 48E. The front edge portions of the non-combustible paper 44 and the glass cloth 46 of the cover unit 42-3 are positioned more forwardly than the front edge portion of the mica plate 48E, and the rear edge portions of the non-combustible paper 44 and the glass cloth 46 of the cover unit 42-3 are positioned more rearwardly than the rear edge portion of the mica plate 48F. Furthermore, sometimes the two mica plates 48 provided on the glass cloth 46 of the cover unit 42-4 will be called the mica plates 48G, 48H. The mica plate 48H is positioned rearward of the mica plate 48G. The front edge portions of the non-combustible paper 44 and the glass cloth 46 of the cover unit 42-4 are positioned more forwardly than the front edge portion of the mica plate 48G, and the rear edge portions of the non-combustible paper 44 and the glass cloth 46 of the cover unit 42-4 are positioned more rearwardly than the rear edge portion of the mica plate 48H.

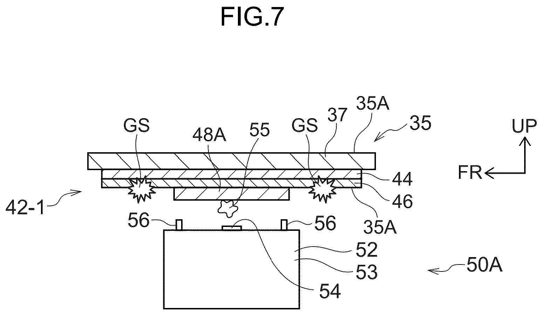

Moreover, as shown in FIG. 6 and FIG. 7, the upper surfaces of the non-combustible papers 44 of the four cover units 42-1, 42-2, 42-3, 42-4 are secured to the inner surface (lower surface) of the top plate portion 37 of the upper case 35 using heat-resistant double-sided tape (not shown in the drawings). More specifically, the cover unit 42-1 is secured to the front portion of the left half of the top plate portion 37, the cover unit 42-2 is secured to the front portion of the right half of the top plate portion 37, the cover unit 42-3 is secured to the rear portion of the left half of the top plate portion 37, and the cover unit 42-4 is secured to the rear portion of the right half of the top plate portion 37. As shown in FIG. 6, a gap GP1 is formed between the right-side edge portion of the cover unit 42-1 and the left-side edge portion of the cover unit 42-2, and a gap GP1 is formed between the right-side edge portion of the cover unit 42-3 and the left-side edge portion of the cover unit 42-4. Moreover, a gap GP2 is formed between the rear-side edge portion of the cover unit 42-1 and the front-side edge portion of the cover unit 42-3, and a gap GP2 is formed between the rear-side edge portion of the cover unit 42-2 and the front-side edge portion of the cover unit 42-4.

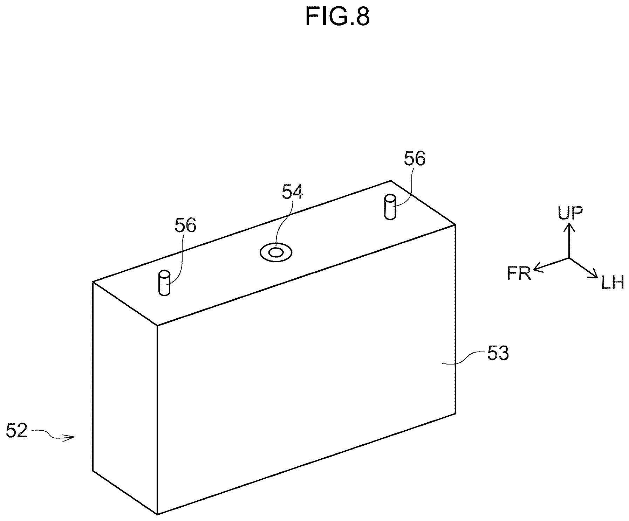

As shown in FIG. 3, inside the lower case 24 are provided eight battery stacks 50A, 50B, 50C, 50D, 50E, 50F, 50G, 50H. Each of the battery stacks 50A, 50B, 50C, 50D, 50E, 50F, 50G, 50H includes a plurality of battery cells 52 arranged in the left and right direction, numerous busbars (not shown in the drawings), and a cooler (not shown in the drawings). It will be noted that when it is not necessary to distinguish between each of the battery stacks, the battery stacks 50A, 50B, 50C, 50D, 50E, 50F, 50G, 50H may be collectively called the battery stacks 50. As shown in FIG. 8, a relief valve 54 and a pair of external electrodes 56 are provided on the upper surface of a cell case 53 made of metal configuring the outer shape of each battery cell 52 which is a lithium-ion battery. One of the external electrodes 56 is a positive electrode, and the other of the external electrodes 56 is a negative electrode. The relief valve 54 opens when the value of the pressure in the inside space of the battery cell 52 reaches a predetermined pressure (threshold) to thereby discharge built-in components housed in the inside space of the cell case 53 to the outside. The relief valve 54 of this embodiment is separate from the cell case 53 and is relatively movable with respect to the cell case 53. However, the relief valve 54 may also be a weak portion formed in the cell case 53. The weak portion is, for example, a portion that is thinner than its surrounding portion and formed in the cell case 53.

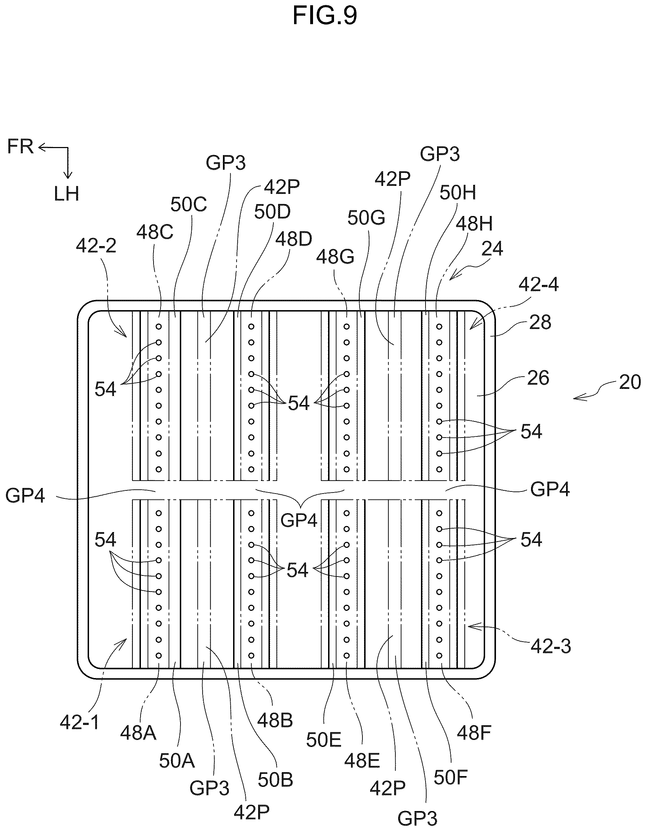

As shown in FIG. 9, the battery stacks 50A, 50B, 50C, 50D, 50E, 50F, 50G, 50H are housed inside the lower case 24. More specifically, the lower surfaces of the battery stacks 50A, 50B are secured to the front portion of the left half of the lower plate portion 26 of the lower case 24, the lower surfaces of the battery stacks 50C, 50D are secured to the front portion of the right half of the lower plate portion 26, the lower surfaces of the battery stacks 50E, 50F are secured to the rear portion of the left half of the lower plate portion 26, and the lower surfaces of the battery stacks 50G, 50H are secured to the rear portion of the right half of the lower plate portion 26. Gaps GP3 are formed between the battery stack 50A and the battery stack 50B, between the battery stack 50C and the battery stack 50D, between the battery stack 50E and the battery stack 50F, and between the battery stack 50G and the battery stack 50H. Moreover, gaps GP4 are formed between the battery stack 50A and the battery stack 50C, between the battery stack 50B and the battery stack 50D, between the battery stack 50E and the battery stack 50G, and between the battery stack 50F and the battery stack 50H.

A sealant (not shown in the drawings) is provided on the entire upper surface of the outer peripheral flange 28 of the lower case 24 in which the battery stacks 50 have been housed, and the outer peripheral flange 39 of the upper case 35 is placed on the upper surface of the outer peripheral flange 28 and the sealant. Moreover, the outer peripheral flange 28 and the outer peripheral flange 39 are secured to each other in a plurality of places by a plurality of securing members. The securing members are, for example, bolts that pass through the outer peripheral flange 28 and the outer peripheral flange 39 and nuts that are screwable onto the bolts. Because of this, the battery device 20 is completed.

When the battery device 20 is completed, as shown in FIG. 9, the mica plates 48A, 48B, 48C, 48D, 48E, 48F, 48G, 48H oppose, from directly above, the relief valves 54 of the battery stacks 50A, 50B, 50C, 50D, 50E, 50F, 50G, 50H. As shown in FIG. 7, a gap is formed between each relief valve 54 and each mica plate 48.

The battery case 22 of the battery device 20 with this configuration is supported by the rockers 12 and the crossmembers 14. That is, as shown in FIG. 1 and FIG. 2, in a state in which the top plate portion 37 and the peripheral wall portion 38 of the upper case 35 are positioned in the space defined by the rockers 12 and the crossmembers 14, the outer peripheral flange 39 is brought into contact from below with the lower surfaces of the rockers 12 and the crossmembers 14. Moreover, the outer peripheral flange 28 and the outer peripheral flange 39 are secured to the lower surfaces of the rockers 12 in a plurality of places by a plurality of securing members. The securing members are, for example, bolts that pass through bottom plates of the rockers 12, the outer peripheral flange 28, and the outer peripheral flange 39 and weld nuts that are screwable onto the bolts and secured to the upper surfaces of the bottom plates of the rockers 12.

The upper surface of the top plate portion 37 of the upper case 35 configures a floor panel of the vehicle 10. It will be noted that the upper surface of the top plate portion 37 is covered with a cloth-like mat material (not shown in the drawings).

(Action and Effects)
Next, the action and effects of the embodiment will be described.

When, for example, a short circuit occurs in any of the battery cells 52 of the battery device 20, the internal pressure of that battery cell 52 rises. When the internal pressure of that battery cell 52 reaches a predetermined value, the relief valve 54 opens and hot built-in components provided inside the battery cell 52 are discharged forcefully via the relief valve 54 upward of the cell case 53. The built-in components include, for example, an internal electrode 55 (current collector terminal) (see FIG. 7), an electrolyte solution, and gas. The internal electrode 55 is electrically connected to an electrode body (not shown in the drawings) provided inside the cell case 53 and the external electrodes 56 (see FIG. 8) provided on the upper surface of the cell case 53.

When, for example, the hot built-in components are discharged forcefully upward from the relief valve 54 of one battery cell 52 of the battery stack 50A, as shown in FIG. 7, for example the internal electrode 55 that is hot and greater in weight than other built-in components (e.g., gas GS) collides forcefully with the mica plate 48A of the cover unit 42-1 positioned directly above the relief valve 54. However, the mechanical strengths of the mica plate 48A and the glass cloth 46 of the cover unit 42-1 are higher than that of the non-combustible paper 44. That is, the mechanical strengths of the mica plate 48A and the glass cloth 46 are high, and particularly the mechanical strength of the mica plate 48A is high. For that reason, even if the internal electrode 55 collides forcefully with the mica plate 48A, the risk is small that the non-combustible paper 44 of the cover unit 42-1 will come off from the inner surface of the top plate portion 37 of the upper case 35. For that reason, the non-combustible paper 44 and the glass cloth 46 can inhibit the heat of the hot internal electrode 55 discharged upward from the battery cell 52 from being transmitted to the upper case 35. For that reason, the battery device 20 can inhibit the battery case 22 from becoming hot due to the effects of the hot built-in components discharged from the battery cell 52. Consequently, the floor panel, which is the top plate portion 37 of the upper case 35, is unlikely to become hot.

It will be noted that built-in components that have a large weight (e.g., the internal electrode 55) are more likely to have a narrower diffusion area after being discharged from the relief valve 54 than built-in components that have a small weight (e.g., the gas GS). For that reason, the risk is small that the internal electrode 55, which is a built-in component that has a large weight, will collide forcefully with the glass cloth 46.

According to an experiment conducted by the present inventor, when the cover unit 42 includes just the non-combustible paper 44, the risk is great that the non-combustible paper 44 will come off from the top plate portion 37 when hot built-in components collide forcefully with the non-combustible paper 44. Furthermore, also when the cover unit 42 includes just the non-combustible paper 44 and the glass cloth 46 or when the cover unit 42 includes just the non-combustible paper 44 and the mica plates 48A, 48B, the risk is great that the non-combustible paper 44 will come off from the top plate portion 37 when built-in components collide forcefully with the cover unit 42.

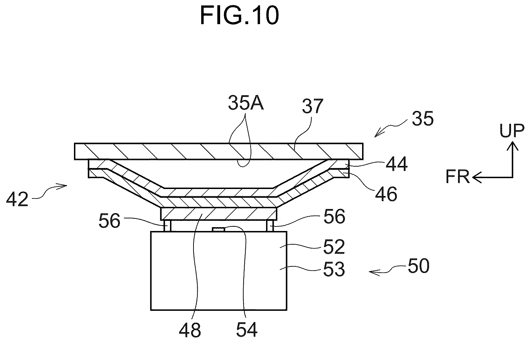

It will be noted that when the built-in components of the battery cell 52 collide forcefully with the mica plate 48, as shown in FIG. 10, the cover unit 42 may fall off downward from the top plate portion 37. In this case, the mica plate 48 may come into contact with the external electrodes 56 provided on the upper surfaces of the cell cases 53 of the plurality of battery cells 52 (in FIG. 10, just one battery cell 52 is shown) positioned directly under it. That is, there is the risk that the mica plate 48 will simultaneously come into contact with the external electrodes 56 of the plurality of battery cells 52 whose relief valves 54 have not been opened. However, since the mica plate 48 has electrical insulation properties, a short circuit via the mica plate 48 does not occur between two adjacent battery cells 52. For that reason, the risk is small that the battery cells 52 whose relief valves 54 have not been opened will become hot due to the mica plate 48.

In this way, by combining the non-combustible paper 44, the glass cloth 46, and the mica plate 48 that have mutually different characteristics, the cover unit 42 that has excellent thermal insulation properties, mechanical strength, and electrical insulation properties is configured. Additionally, since the cover unit 42 is provided on the top plate portion 37 of the upper case 35 so as to oppose the battery cells 52 (the relief valves 54), the battery device 20 can exhibit the above action and effects.

Moreover, since the battery device 20 is provided in the vehicle 10, moisture such as rain easily sticks to the lower case 24 and the upper case 35. The lower case 24 and the upper case 35 are configured by a metal material containing iron, but the entire surfaces of the lower case 24 and the upper case 35 are coated with the cationic coatings 24A, 35A. For that reason, although moisture easily sticks to the surfaces of the lower case 24 and the upper case 35, the lower case 24 and the upper case 35 are unlikely to rust.

Moreover, the parts of the battery case 22 coated with the cationic coatings easily self-ignite when they become hot. However, when the hot built-in components are discharged toward the top plate portion 37 from the relief valve 54 of any of the battery cells 52 as mentioned above, the top plate portion 37 is unlikely to become hot. For that reason, the risk is small that the top plate portion 37 of the upper case 35 will self-ignite due to the hot built-in components discharged upward from the relief valve 54.

Furthermore, as shown in FIG. 7, the discharge range of the hot gas GS, which is included in the built-in components and is lighter than the internal electrode 55, tends to become wider than the discharge range from the battery cell 52 of the internal electrode 55 that is discharged from the battery cell 52 and collides forcefully with the mica plate 48. However, the area of the non-combustible paper 44 and the glass cloth 46 when viewed in the thickness direction of the non-combustible paper 44 (the up and down direction) is greater than the area of the mica plate 48. For that reason, the non-combustible paper 44 and the glass cloth 46 can inhibit the top plate portion 37 from becoming hot due to the hot gas GS discharged from the relief valve 54 across a wide range. It will be noted that even if the gas GS contacts forcefully the mica plate 48 or the glass cloth 46, the risk is small that the non-combustible paper 44 will come off from the inner surface of the top plate portion 37.

Moreover, a single mica plate 48 of each cover unit 42 opposes, in the up and down direction, the relief valves 54 of each of the battery cells 52 included in the battery stack 50 positioned directly under it. For that reason, the number of parts of the battery device 20 is small compared with a case where each cover unit 42 includes the same number of mica plates as the number of relief valves 54 of each of the battery cells 52 included in the battery stack 50 positioned directly under each cover unit 42.

Moreover, as shown in FIG. 6 and FIG. 9, the non-combustible paper 44 and the glass cloth 46 of each cover unit 42 have a portion 42P positioned directly above the gap GP3 formed between the two battery stacks 50 that are positioned directly under the non-combustible paper 44 and the glass cloth 46 and are arranged next to each other in the front and rear direction. That is, when the battery device 20 is viewed along the up and down direction, a part of the single non-combustible paper 44 and glass cloth 46 (the portion 42P) overlies the gap GP3. These portions 42P are away, in the front and rear direction, from the relief valves 54 of the battery cells 52 of the battery stacks 50 as seen in a plan view. For that reason, the risk is small that the hot built-in components discharged from the relief valves 54 of the battery cells 52 will come into contact with these portions 42P. For that reason, it is also possible to divide each cover unit 42 into two parts positioned in front and back of the portions 42P. However, in this case, eight cover units need to be provided on the top plate portion 37, which ends up increasing the number of parts of the battery device 20. In contrast, when each cover unit 42 has the portion 42P as in the battery device 20 of this embodiment, the number of cover units 42 provided on the top plate portion 37 becomes four. For that reason, the number of parts of the battery device 20 can be reduced compared with a case where each cover unit 42 does not have the portion 42P. For that reason, the work of assembling the battery device 20 is easy compared with a case where each cover unit 42 does not have the portion 42P.

A battery device pertaining to an embodiment has been described above, but the battery device may be appropriately modified in design without departing from the spirit of the disclosure.

For example, each of the cover units 42 may include an intermediate material different from the glass cloth 46. This intermediate material has a higher mechanical strength than the non-combustible paper 44. Moreover, this intermediate material preferably has higher thermal insulation properties than the mica plates 48. Moreover, this intermediate material preferably has electrical insulation properties. Such an intermediate material includes a plate material made of silica cloth or ceramic, for example.

Furthermore, each of the cover units 42 may include insulating plates different from the mica plates 48. The electrical insulation properties of this insulating plates are higher than those of the non-combustible paper 44. Moreover, the electrical insulation properties of this insulating plates may be higher than those of the intermediate material. Furthermore, this insulating plates have a higher mechanical strength than the non-combustible paper 44. Moreover, this insulating plates may have a higher mechanical strength than the intermediate material. Such insulating plates include thermosetting resin plates, for example. Specific examples of thermosetting resins include unsaturated polyester.

The cover units 42 may be provided on parts of the battery case 22 different from the inner surface of the top plate portion 37. For example, when the battery device 20 includes just four battery stacks 50A, 50C, 50F, 50H and a relief valve 54 is provided in the front surfaces of each of the battery cells 52 of the battery stacks 50A, 50C and the rear surfaces of each of the battery cells 52 of the battery stacks 50F, 50H, the cover units 42 may be provided on at least one of the front portion and rear portion of the peripheral wall portion 27 of the lower case 24 and the front portion and rear portion of the peripheral wall portion 38 of the upper case 35.

The non-combustible papers 44 of the cover units 42 may be secured to the inner surface of the battery case 22 using a heat-resistant adhesive. Likewise, the non-combustibles paper 44 and the intermediate materials of the cover units 42 may be secured to each other by a heat-resistant adhesive, and the intermediate materials and the insulating plates may be secured to each other by a heat-resistant adhesive.

The number of the battery stacks 50 housed in the battery case 22 may be a number different from eight.

The battery stacks 50 housed in the battery case 22 may each include a plurality of battery cells 52 arranged in a direction different from the left and right direction. In this case, the insulating plates of the cover units 42 extend in a direction parallel to the arrangement direction of the battery cells 52 as seen in a plan view, and the insulating plates oppose the relief valves 54 of the pluralities of battery cells 52 in the thickness direction of the insulating plates.

The non-combustible paper 44 may be provided on the entire inner surface of the top plate portion 37 of the upper case 35, the non-combustible paper 44 may be provided on the entire inner surface of the upper case 35, or the non-combustible paper 44 may be provided on the entire inner surface of the battery case 22.

The cover units 42 may each include a plurality of insulating plates that are the same in number as the opposing relief valves 54 and which oppose each of the relief valves 54.

The vehicle may be an electric vehicle that is different from a battery electric vehicle and includes an electric motor that utilizes the electrical power of the battery device 20. For example, the vehicle may be a hybrid electric vehicle (HEV) or a plug-in hybrid electric vehicle (PHEV).

## Claims

1. A battery device comprising:
a plurality of battery cells, each including a cell case provided with a relief valve that opens when internal pressure reaches a predetermined threshold;
a case that houses the plurality of battery cells;
a non-combustible paper that is provided at at least a part of an inner surface of the case;
an intermediate material that is provided at a surface of the non-combustible paper opposite from the inner surface and that has a higher mechanical strength than the non-combustible paper; and
an insulating plate that is provided at a surface of the intermediate material opposite from the non-combustible paper, that opposes the relief valves, and that has electrical insulation properties and a higher mechanical strength than the non-combustible paper,
wherein thermal insulation properties of the non-combustible paper and the intermediate material are higher than thermal insulation properties of the insulating plate.

2. The battery device of claim 1, wherein:
the case is configured by a material containing iron, and
the inner surface of the case is coated with a cationic coating.

3. The battery device of claim 1 or claim 2, wherein an area of the non-combustible paper and the intermediate material when viewed in a thickness direction of the non-combustible paper is greater than an area of the insulating plate.

4. The battery device of claim 1 or claim 2, wherein the intermediate material is glass cloth.

5. The battery device of claim 1 or claim 2, wherein the insulating plate is a mica plate.

6. The battery device of claim 1 or claim 2, wherein:
the case includes a lower case and an upper case that is integrated with the lower case to configure, with the lower case, the case,
the relief valves are provided at upper surfaces of the cell cases, and
the non-combustible paper is provided at a top portion of an inner surface of the upper case.

7. The battery device of claim 1 or claim 2, wherein:
a battery stack having the plurality of battery cells arranged in a predetermined linear direction as seen in a plan view is provided inside the case,
the insulating plate is a plate material extending along the linear direction, and
the insulating plate is a single insulating plate that opposes the relief valves of the plurality of battery cells.

8. The battery device of claim 7, wherein:
a plurality of battery stacks are arranged while forming a gap in a direction orthogonal to the linear direction as seen in a plan view,
two insulating plates oppose each plurality of battery cells arranged in the linear direction, and
the two insulating plates are provided at the intermediate material, which is a single intermediate material that overlies the gap when viewed in a thickness direction of the non-combustible paper.

9. The battery device of claim 8, wherein:
the intermediate material is a single intermediate material, the non-combustible paper is a single non-combustible paper, and the single intermediate material is provided at the single non-combustible paper, and
when a direction orthogonal to the linear direction when viewed in the thickness direction of the non-combustible paper is defined as an orthogonal direction, end portions of the non-combustible paper and the intermediate material on one side in the orthogonal direction are positioned more toward the one side than are the two insulating plates, and end portions of the non-combustible paper and the intermediate material on another side in the orthogonal direction are positioned more toward the other side than are the two insulating plates.

10. The battery device of claim 1 or claim 2, wherein the battery device is installed at an electric vehicle.
